# EUROPÄISCHE PATENTANMELDUNG

(11) **EP 1 188 979 A2**
(43) Veröffentlichungstag der Anmeldung: **20.03.2002**
(21) Anmeldenummer: 01121225.5
(22) Anmeldetag: 05.09.2001
(51) Int. Cl.: F16L 37/18, F16L 37/133

(54) **Vorrichtung zur Verbindung von Rohrleitungsabchnitten untereinander**

(30) Priorität: 14.09.2000 DE 10045882; 10.07.2001 DE 20111218 U
(71) Anmelder: SEM Schneider Elementebau GmbH & Co. KG, 06578 Oldisleben (DE)
(72) Erfinder: Brink, Egon Paul, 47906 Kempen (DE); Hopf, Ingo, 44227 Dortmund (DE); Menge, Jörg, Dipl.-Ing., 06556 Artem (DE)
(74) Vertreter: Bonsmann, Joachim Bernhard

(57) **Zusammenfassung**

Bei einer Vorrichtung zur Verbindung von Rohrleitungsabschnitten (1, 2) untereinander ist vorgesehen, dass zusätzlich zu der eigentlichen Verbindungseinrichtung eine sowohl an dem einen als auch an dem anderen Rohrleitungsabschnitt derart angreifende Vorspanneinrichtung (5) vorgesehen ist, dass in deren Wirkstellung eine im wesentlichen in Achsrichtung wirkende Zusammenhaltekraft auf die Rohrleitungsabschnitte ausgeübt wird. Auf diese Weise wird eine selbstnachspannend ausgebildete Verbindung der Rohrleitungsabschnitte erzielt.

## Beschreibung

Die Erfindung betrifft eine Vorrichtung zur Verbindung von Rohrleitungsabschnitten untereinander, vorzugsweise eine solche, bei der die miteinander zu verbindenden Rohrleitungsabschnitte jeweils konisch ausgebildete Endbereiche mit im wesentlichen gleichen Konuswinkeln aufweisen und über eine Steckverbindung durch Einstecken des konisch ausgebildeten Außen-Endbereichs des einen Rohrleitungsabschnittes in den konisch ausgebildeten Innen-Endbereich des anderen Rohrleitungsabschnittes miteinander verbindbar sind.

Es ist oft zweckmäßig, die Verbindungen von Rohrleitungsabschnitten, insbesondere durch Einstecken des konisch ausgebildeten Endbereiches eines Rohrleitungsabschnittes in den konisch ausgebildeten Endbereich eines anderen Rohrleitungsabschnittes erstellte Steckverbindungen, durch zusätzliche Haltemittel, wie beispielsweise im Verbindungsbereich der Rohrleitungsabschnitte angebrachte Rohrschellen od. dgl., zu unterstützen. Bei einer vertikalen Anordnung von über eine Steckverbindung miteinander verbundenen Rohrleitungsabschnitten wirkt das Gewicht von oberhalb der jeweils betrachteten Rohrverbindungen angeordneten Rohrleitungsabschnitten stabilisierend auf die Steckverbindung. Wenn sich aber oberhalb der betrachteten Steckverbindung nur noch ein kurzer Rohrbereich befindet, so reicht manchmal die Gewichtskraft oberhalb der Verbindung befindlicher Rohrabschnitte für eine ausreichende Stabilisierung der Steckverbindung nicht aus.

Sofern über Steckverbindungen der vorstehend genannten Art miteinander verbundene Rohrleitungsabschnitte in Gebrauchslage horizontal angeordnet sind, fehlt die Einwirkung einer derartigen Gewichtskraft. Wenn Schellen als zusätzliche Haltemittel eingesetzt werden, ist nachteilig, dass die Anbringung von Schellen einen ausreichenden Montageraum erfordert. Weiterhin ist von Nachteil, dass schellenartige Haltemittel nicht dem Umstand Rechnung tragen, dass sich die Geometrie der Verbindungsbereiche der Rohrleitungsabschnitte im Laufe der Betriebszeit ändern kann, beispielsweise durch Wärmeeinwirkung und/oder Rüttel- bzw. Vibrationsvorgänge. Es kann daher sein, dass sich über eine Steckverbindung miteinander verbundene Rohrleitungsabschnitte nach dem Herstellen der Verbindung in ihrer Position zueinander verändern, etwa dadurch, dass die konischen Bereiche nach einer gewissen Zeit enger ineinanderrutschen.

Der Erfindung liegt die Aufgabe zugrunde, Vorrichtungen der eingangs genannten Art so zu verbessern, dass die Verbindung der Rohrleitungsabschnitte unterstützende Haltemittel dauerhaft wirksam sind.

Zur Lösung dieser Aufgabe ist erfindungsgemäß vorgesehen, dass eine sowohl an dem einen als auch an dem anderen Rohrleitungsabschnitt derart angreifende Vorspanneinrichtung vorgesehen ist, dass in deren Wirkstellung eine im Wesentlichen in Achsrichtung der konisch ausgebildeten Endbereiche wirkende Zusammenhaltekraft auf die Rohrleitungsabschnitte ausgeübt wird.

Hierbei ist vorteilhaft, dass die durch die Vorspanneinrichtung auf die miteinander verbundenen Rohrleitungsabschnitte zusätzlich einwirkenden Kräfte in axialer Richtung wirksam und dementsprechend geeignet sind, ein Nachspannen zu bewirken, während die bei schellenartigen Haltemitteln aufgebrachten Kräfte radial wirken und dementsprechend bei in axialer Richtung auftretenden geometrischen Änderungen der Verbindung wirkungslos bleiben. Im Gegensatz hierzu sind die über die Steckverbindung miteinander verbundenen Rohrleitungsabschnitte durch die erfindungsgemäß vorgesehene Vorspanneinrichtung in axialer Richtung gegeneinander vorgespannt, so dass dadurch die Rohrverbindung selbstnachspannend ausgebildet ist.

In einer bevorzugten Ausführungsform der Erfindung ist vorgesehen, dass zwischen den im Verbindungszustand einander zugewandten Oberflächen der konisch ausgebildeten Endbereiche eine Zwischenschicht aus einem dauerhaft plastischen Material vorgesehen ist. Die Zwischenschicht kann vollflächig oder auch nur in Teilbereichen zwischen den einander zugewandten Oberflächen der konisch ausgebildeten Endbereiche vorgesehen sein.

Der Zwischenschicht ist vorzugsweise in einer eine unmittelbare Anlage und/oder Festfressen und/oder Kaltverschweißen der einander zugewandten Oberflächen der konischen Endbereiche verhindernden Weise ausgebildet. Die Zwischenschicht kann gleichzeitig auch als Dichtmittel wirken.

Durch die Zwischenschicht, die vorzugsweise auch wärmebeständig ausgebildet ist, wird eine unmittelbare Anlage der einander zugewandten Oberflächen der konischen Endbereiche verhindert und erreicht, dass durch die in axialer Richtung wirkende Vorspannkraft der Vorspanneinrichtung erforderlichenfalls eine Relativbewegung der Rohrleitungsabschnitte aufeinander zu bewirkt werden kann, dass also die Wirkung der Vorspanneinrichtung nicht etwa durch gegeneinander festgefressene oder kaltverschweißte Bereiche der einander zugewandten Oberflächenbereiche verhindert wird.

Die somit als "Trennmittel" wirkende Zwischenschicht kann beispielsweise durch Auftragen eines pastösen Werkstoffes auf wenigstens einen der konisch ausgebildeten Endbereiche vor deren Zusammenstecken aufgebracht sein.

Die Zwischenschicht kann aber auch ein- oder beidseitig auf einem Trägermaterial aufgebracht sein, welches vor dem Zusammenstecken der konisch ausgebildeten Endbereiche nach Art eines Klebebandes auf wenigstens einen der konisch ausgebildeten Endbereiche aufgebracht worden ist.

In einer ersten bevorzugten Ausführungsform der erfindungsgemäßen Vorspanneinrichtung weist diese wenigstens einen - bevorzugt zwei - mit einem Stirnendbereich an dem Außenumfang des einen Rohrleitungsabschnittes anbringbare bzw. angebrachte Federbügel auf, die in ihrer nicht der Wirkstellung entsprechenden Grundstellung konvex gekrümmt sind und die, um die Federbügel in ihre Wirkstellung zu bringen, in eine gegenüber der gekrümmten Grundstellung gestreckte Stellung gebracht werden. In dieser gestreckten Stellung werden die freien Stirnendbereiche der Federbügel jeweils mit dem anderen Rohrleitungsabschnitt verbunden, so dass im Ergebnis eine Zugspannung zwischen den beiden Rohrleitungsabschnitten ausgeübt wird.

Bevorzugt weist jeder Federbügel an einem Ende eine Hakeneinrichtung auf, die in eine an dem anderen Rohrleitungsabschnitt vorgesehene Gegenhalterung einrastbar ist. Bevorzugt weist diese Gegenhalterung einen sich - in axialer Richtung von dem Verbindungsbereich der Rohrabschnitte weg gesehen - konisch vergrößernden Umfangsbereich sowie eine sich an diesen Bereich anschließende, zurückspringende Rastkante auf, derart, dass sich der Federbügel ausgehend von der Grundstellung bei Ausübung einer Kraft in Radialrichtung auf seinen Mittenbereich streckt, wodurch die Hakeneinrichtung den konischen Bereich überstreicht und schließlich bei Erreichen der Rastkante diese hintergreift und damit in der Wirkstellung einrastet.

In dieser bevorzugten Ausführungsform der erfindungsgemäßen Vorspanneinrichtung kann die Montage somit mit einem Handgriff ohne Werkzeug erfolgen. Die beiden Rohrleitungsabschnitte werden hierzu ineinandergesteckt. Anschließend werden die beiden in der Grundstellung konvex gewölbten Federbügel in ihrem Mittenbereich gegen die Rohrwand gedrückt. Dadurch wird der Federbügel jeweils gespannt, wobei die Hakeneinrichtung mit ihrer äußeren Kante an dem konischen Abschnitt der Gegenhalterung entlanggeführt wird. Ist das Ende des konischen Abschnittes erreicht, so hintergreift die Hakeneinrichtung die Rastkante bzw. springt hinter diese zurück. Jetzt kann die Kraftaufbringung auf den Federbügel eingestellt werden. Die Hakeneinrichtung liegt dann gegen die Rastkante an und übt auf diese Weise eine Zugkraft aus, durch die die Rohrleitungsabschnitte im Ergebnis zuverlässig zusammengehalten werden. Die dabei aufgebrachte Vorspannkraft kann durch die Wahl der mechanischen Eigenschaften der Federbügel eingestellt werden.

In einer zweiten Ausführungsform der erfindungsgemäßen Vorspanneinrichtung ist vorgesehen, dass die Vorspannkraft der Vorspanneinrichtung einstellbar ist.

Vorzugsweise weist diese Ausführungsform der Vorspanneinrichtung mehrere, über den Umfang des Verbindungsbereiches angeordnete, jeweils Federelemente aufweisende Einzel-Vorspanneinrichtungen auf.

Weiterhin weist die Vorspanneinrichtung bevorzugt eine zum Angreifen eines Vorspannwerkzeugs ausgebildete Aufnahmeeinrichtung auf.

In vorteilhafter Ausgestaltung der Erfindung kann weiterhin vorgesehen sein, dass die Aufnahmeeinrichtung bei Nicht-Wirkstellung der Vorspanneinrichtung über den Umfang der Rohrleitungsabschnitte verdrehbar ausgebildet ist. Hierdurch kann die Vorspanneinrichtung in die jeweils günstigste Montageposition gebracht werden.

In weiterer Ausgestaltung der Erfindung sind die Federelemente an einem der Rohrleitungsabschnitte außerhalb des konisch ausgebildeten Endbereiches vorzugsweise an einer die Außenseite des Rohrabschnittes umfassenden und in axialer Richtung arretierten ersten Manschette angebracht, während an dem anderen Rohrleitungsabschnitt außerhalb des konischen Endbereiches Gegenhalterungseinrichtungen für die Federelemente vorgesehen sind.

Die Gegenhalterungseinrichtungen sind vorzugsweise an einer den Außenumfang des anderen Rohrleitungsabschnittes umfassenden und in axialer Richtung arretierten zweiten Manschette angebracht.

In der alternativen zweiten Ausführungsform der Erfindung weisen die Gegenhalterungseinrichtungen bevorzugt verstellbar angebrachte Exzenter auf, die zwischen einer Nicht-Vorspannposition und einer Vorspannposition der Federelemente verstellbar ausgebildet sind und in Vorspannposition in einer eine Vorspannung der Federelemente bewirkenden Weise gegen diese anliegen.

Um sicherzustellen, dass die Exzenter vor dem Aufbringen der Vorspannkraft die jeweilige Nicht-Vorspannposition einnehmen, kann in weiterer Ausbildung der Erfindung vorgesehen sein, dass die Manschette Einrichtungen zur Arretierung der Exzenter in ihrer Nicht-Vorspannposition aufweist. Diese Einrichtungen können beispielsweise in Form von Haken ausgebildet sein.

Zur axialen Arretierung können in weiterer Ausbildung der Erfindung die Manschetten mit ihren Innenseiten gegen über das Außenprofil der Rohrleitungsabschnitte nach außen vorstehende Ausformungen anliegen.

Weiterhin kann erfindungsgemäß vorgesehen sein, dass die zur Anlage gegen die Federelemente bestimmten Anlageflächen der Exzenter unterschiedlich gekrümmt ausgebildet sind, derart, dass die Krümmung der Anlageflächen bei maximaler Vorspannposition geringer ist als im Bereich der außerhalb der maximalen Vorspannposition liegenden Anlageflächen. Dadurch nimmt die von der Montageperson mittels des Vorspannwerkzeugs aufzubringende Kraft spürbar dann ab, wenn die maximale Vorspannposition erreicht ist, so dass somit in einfacher Weise für die Montageperson ein zuverlässiger Indikator für das Einstellen der maximalen Vorspannkraft auch bei ungünstigen Raum- und Sichtverhältnissen vorhanden ist.

Die Erfindung wird nachfolgend anhand der Zeichnungen beispielhaft näher erläutert. Es zeigen:
- Fig. 1: eine schematische Ansicht einer Rohrverbindung mit einer Vorspanneinrichtung unter Verwendung von Federbügeln gemäß einer ersten Ausführungsform;
- Fig. 2: eine Rohrverbindung unter Verwendung einer Vorspanneinrichtung mit einem Exzenter gemäß einer zweiten Ausführungsform, wobei die Vorspanneinrichtung nicht aktiviert ist;
- Fig. 3: die Rohrleitungsabschnitte gemäß Fig. 2 in aktiviertem Zustand der Vorspanneinrichtung; und
- Fig. 4: eine schematische Darstellung zweier mit einer Exzentervorspanneinrichutng miteinander zu verbindender Rohrleitungsabschnitte in nicht miteinander verbundenem Zustand.

Sowohl die Rohrleitungsabschnitte als auch die nachfolgend beschriebenen Vorspanneinrichtungen können aus Materialien wie z.B. Stahl, Edelstahl, Aluminium oder geeigneten Kunststoffen hergestellt sein.

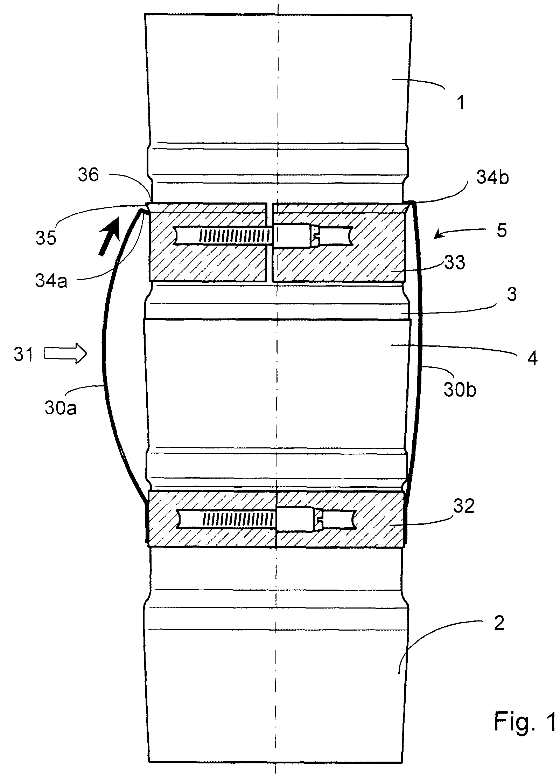

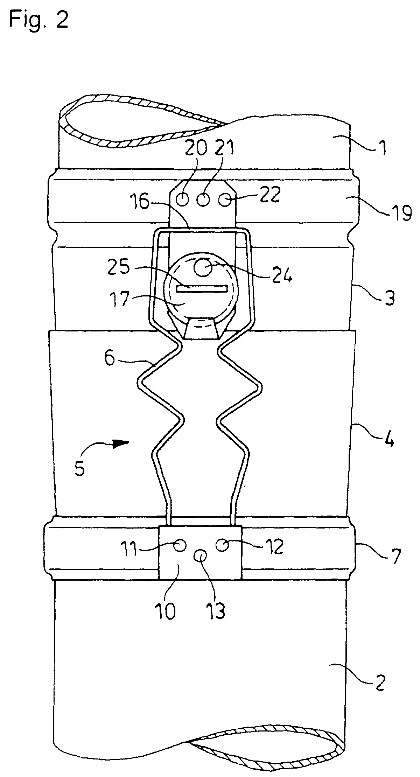

Bei einer in Figur 1 dargestellten ersten Ausführungsform der Vorspanneinrichtung weisen zu verbindende Rohrleitungsabschnitte 1 und 2 jeweils konisch ausgebildete Stirnendbereiche 3 und 4 mit im Wesentlichen gleichen Konuswinkeln auf, die durch Einstecken der beiden konisch ausgebildeten Endbereiche ineinander über eine Steckverbindung - vorzugsweise unter Aufbringung einer Zwischenschicht - miteinander verbindbar sind, wie im Einzelnen anhand der Figuren 2 bis 4 näher erläutert werden wird.

Bei der ersten Ausführungsform gemäß Figur 1 wird die Vorspannung mittels zweier gegenüberliegend angeordneter Federbügel 30a, 30b aufgebracht. Der linke Federbügel 30a befindet sich in seiner nicht der Wirkstellung entsprechenden Grundstellung; der rechte Federbügel 30b ist in seiner Wirkstellung dargestellt. Die Federbügel 30a, 30b, die beispielsweise aus Federstahl gefertigt sein können, sind im Ausführungsbeispiel unverlierbar fest mit einer an dem einen Rohrleitungsabschnitt 2 angebrachten rohrschellenartigen Manschette 32 verbunden, z.B. durch Punktschweißung. Im Rahmen der Erfindung können die Federbügel 30a, 30b auch direkt einseitig mit dem Rohrleitungsabschnitt verschweißt sein oder mittels einer geeigneten Steckvorrichtung abnehmbar bzw. einsteckbar angeordnet sein. Es ist beispielsweise auch denkbar, dass die Federbügel 30a, 30b um einen Zapfen herum drehbar angeordnet sind, um die Federbügel zur Einsparung von Lager- und Transportvolumen wegklappbar zu gestalten.

In der Grundstellung ist der Federbügel 30a bezogen auf die Rohroberfläche konvex gekrümmt, wobei die Krümmung derart gewählt ist, dass eine durch eine Umkantung des Stirnendbereichs des Federbügels 30a gebildete Hakeneinrichtung 34a zur Anlage gegen eine Gegenhalterung vorgesehen ist. Die Gegenhalterung ist im Ausführungsbeispiel durch eine rohrschellenartige Manschette 33 gebildet, die an ihrem oberen Ende einen konischen Bereich 35 aufweist, der in eine zurückspringende Rastkante 36 übergeht. Die Manschetten 32 und 33 sind wie nachstehend anhand der Figuren 2 bis 4 beschrieben gegenüber einer axialen Verschiebung gesichert. Wird zum Einrasten der Vorspanneinrichtung eine Kraft in Richtung des Pfeils 31 auf den Mittenbereich des Federbügels 30a ausgeübt, so wird dieser flachgedrückt, wobei die äußere Kante des Hakenelements 34a an dem konischen Bereich 35 entlanggleitet und schließlich oberhalb der Rastkante 36 diese hintergreift und hörbar einrastet. Wird nunmehr keine Kraft mehr auf den Federbügel ausgeübt, so verbleibt dieser in der bei Federbügel 30b gezeigten Raststellung. Der aus der gekrümmten Grundstellung in eine weniger oder nahezu nicht mehr gekrümmte Wirkstellung ausgelenkte Federbügel 30b bewirkt im Ergebnis eine Zugspannung, die die beiden Rohrleitungsabschnitte zusammenhält.

Das Hakenelement 34a bzw. 34b ist bevorzugt mit einem Winkel von etwas unterhalb von 90° abgewinkelt, so dass dieses die Rastkante 36 winklig hintergreift. Dadurch wird es mit normalem Kraftaufwand unmöglich, den Federbügel durch Aufbringung einer gegenüber der Kraft gemäß dem Pfeil 31 umgekehrten Kraft wieder zu entfernen, da die Rastkante 36 ein Abheben des Federbügels senkrecht zur Rohroberfläche verhindert. Vielmehr muss der Federbügel 30b zum Entfernen etwas weiter in Richtung des Pfeils 31 niedergedrückt und dann das Hakenelement 34b von der Haltekante 36 abgezogen werden. Somit sind die Federbügel 30a, 30b mit jeweils einem einzigen Handgriff einrastbar, jedoch in erwünschter Weise vor einem versehentlichen Lösen geschützt, wobei jedoch auch das Lösen ohne Werkzeugeinsatz möglich ist.

Die Gegenhalterung wird im Ausführungsbeispiel durch eine - bis auf einen kleinen Spalt - vollständig umlaufende Manschette 33 gebildet. Dass die Manschette umlaufend ausgebildet ist, bietet den Vorteil, dass die beiden Rohrleitungsabschnitte 1, 2 nicht gegeneinander ausgerichtet, sondern in nahezu beliebiger Winkelposition gegeneinander arretiert werden können. Selbstverständlich sind im Rahmen der Erfindung auch alternative Ausführungsformen für die Gegenhalterung denkbar, bei denen die Gegenhalterung z.B. integral aus dem Rohrleitungsmaterial herausgearbeitet ist.

Im verbundenen Zustand erweisen sich die Federbügel als äußerst flach, so dass diese kaum über den Außenumfang der verbundenen Rohrleitungsabschnitte hervorstehen. Sie sind weiterhin besonders preiswert herzustellen.

In den Figuren 2 bis 4 ist eine Rohrverbindung mit einer zweiten Ausführungsform der erfindungsgemäßen Vorspanneinrichtung dargestellt.

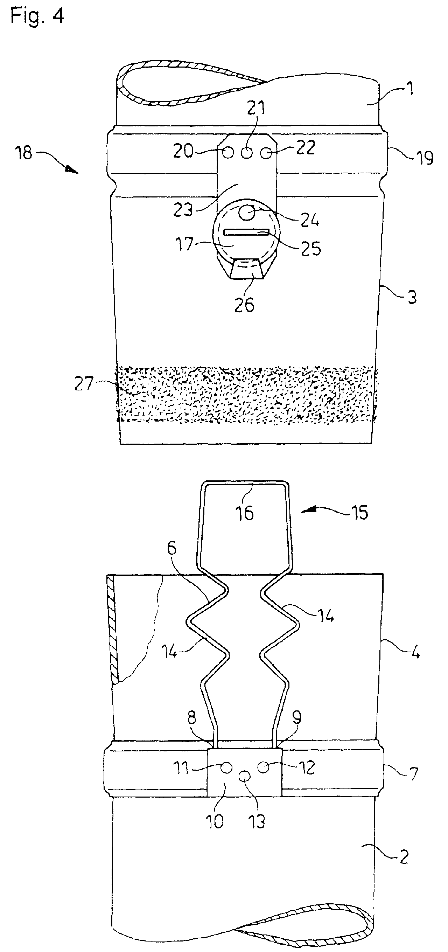

Figur 4 zeigt die beiden Rohrleitungsabschnitte 1 und 2 im nicht miteinander verbundenen Zustand, und Figur 2 zeigt die Rohrleitungsabschnitte 1 und 2 in ihrem miteinander verbundenen Zustand, bei dem der konisch ausgebildete Außen-Endbereich 3 in den konisch ausgebildeten Innen-Endbereich 4 eingesteckt ist. Zusätzlich zu der Steckverbindung ist eine insgesamt mit 5 bezeichnete Vorspanneinrichtung vorgesehen, mittels derer in ihrer Wirkstellung eine im wesentlichen in Achsrichtung der Rohrleitungsabschnitte bzw. der konisch ausgebildeten Endbereiche 3 und 4 wirkende Vorspannkraft bzw. Zusammenhaltekraft auf die zusammengesteckten konisch ausgebildeten Endbereiche 3 und 4 ausgeübt wird. Die Vorspanneinrichtung 5 weist in einer in den Figuren 2 bis 4 dargestellten Ausführungsform mehrere über den Umfang verteilt angeordnete Federelemente 6 auf, von denen in den Zeichnungen zur Vereinfachung der Darstellung nur ein Federelement 6 gezeigt ist. Die Federelemente 6 sind an dem Rohrleitungsabschnitt 2 an einer die Außenseite des Rohrabschnittes 2 außerhalb des konischen Bereiches 4 umfassenden und in axialer Richtung arretierten Manschette 7 angebracht. Die Manschette liegt zur axialen Arretierung gegen eine der Innenkontur der Manschette 7 entsprechend ausgebildete Ausformung des Rohrleitungsabschnittes 2 an. Diese Ausformung ist wulstartig gestaltet. Die Manschette 7 ist relativ zu der Ausformung des Rohrleitungsabschnittes 2 um dessen Achse verdrehbar. Die Federelemente 6 sind in Form von Drahtösen gestaltet, wobei die beiden Enden 8 und 9 fest an der Manschette 7 angebracht sind. Die Befestigung erfolgt jeweils mittels einer Platte 10, die an Stellen 11, 12 und 13 mit der Manschette 7 punktverschweißt ist. Die Federelemente weisen spiegelbildlich verlaufende zick-zack-förmig ausgebildete Bereiche 13 und 14 sowie ösenartig gestaltete geschlossene Enden 15 mit einem gerade ausgebildeten, zur Anlage gegen einen verstellbaren Exzenter 17 vorgesehenen Bereich 16 auf. Der Exzenter 17 ist an einer insgesamt mit 18 bezeichneten Gegenhalterungseinrichtung an dem Rohrleitungsabschnitt 1 angebracht, und zwar an einer zweiten Manschette 19, die in ähnlicher Weise wie die Manschette 7 in axialer Richtung arretiert und verdrehbar auf einer entsprechend der Innenkontur der Manschette 19 ausgebildeten Ausformung des Rohrleitungsabschnittes 1 angebracht ist. An der Manschette 19 ist über Punktschweißverbindungen 20, 21 und 22 ein Halteblech 23 angebracht, an welchem der Exzenter 17 um eine Exzenterachse 24 verdrehbar angeordnet ist. Der Exzenter 17 weist eine als Schlitz zum Einführen eines Schraubendrehers ausgebildete Aufnahmeeinrichtung 25 zum Angreifen eines Vorspannwerkzeugs auf. Das der Manschette 19 abgewandte Ende der Platte 23 ist in Form eines Hakens 26 gestaltet. Der Haken 26 liegt gegen den Exenter 17 in der in Fig. 4 gezeichneten Nicht-Vorspannposition an und hält den Exzenter in dieser Position, bis dieser mittels des Vorspannwerkzeugs in eine andere Position gedreht wird. Die Federelemente 6 erstrecken sich in ihrer Längsrichtung in etwa in Längsrichtung der Rohrwandung des Rohrleitungsabschnittes 2 und können bei dem Zusammenstecken des Rohrleitungsabschnittes 2 mit dem Rohrleitungsabschnitt 1 infolge ihrer Elastizität ohne weiteres über den jeweiligen Haken 26 und Exzenter 17 geführt werden.

Vor dem Einführen des konisch ausgebildeten Außen-Endbereichs 3 in den konisch ausgebildeten Innen-Endbereich 4 wird auf den Außenkonus des konisch ausgebildeten Endbereiches 3 eine Zwischenschicht 27 aus einem wasserbeständigen, dauerhaft plastischen Material aufgebracht. Das Aufbringen der Zwischenschicht kann durch Auftragen einer Montagepaste oder auch durch Aufbringen eines die Zwischenschicht ein- oder beidseitig aufweisenden Trägermaterials erfolgen, welches nach Art eines Klebebandes auf wenigstens einen der Endbereiche aufgebracht wird. Bei der Zwischenschicht handelt es sich um ein Material, welches die einander in zusammengestecktem Zustand der konisch ausgebildeten Endbereiche 3 und 4 einander zugewandten Oberflächen wirksam voneinander getrennt hält, derart, dass ein Festfressen oder Kaltverschweißen der einander in zusammengestecktem Zustand zugewandten Oberflächen verhindert wird. Die Zwischenschicht ist außerdem noch temperaturbeständig ausgebildet (vorzugsweise zwischen minus 40°C und plus 1400°C) und darüber hinaus metall- und wasserfrei.

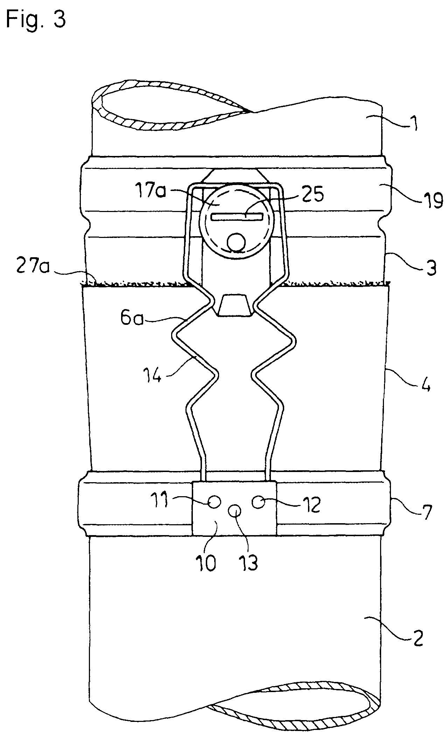

Figur 3 zeigt die Vorrichtung gemäß Figur 2, jedoch bei aktivierter Vorspanneinrichtung 5. Hierzu wird ein geeignetes Werkzeug, und zwar bei dem gezeigten Ausführungsbeispiel ein Schraubendreher, in die Aufnahmeeinrichtung 25 eingeführt und dann der Exzenter 17 um etwa 180° um die Exzenterachse 24 verschwenkt. Das Federelement 6 ist derart gestaltet, dass in nicht aktiviertem Zustand der Vorspanneinrichtung 5 (Fig. 2) der Abstand zwischen der Exzenterachse 24 und dem Bereich 16 kleiner ist als der Abstand zwischen der Exzenterachse 24 und dem entsprechend Figur 4 bzw. entsprechend Figur 2 am weitesten unten liegenden Endbereich des Exzenters 17. Wenn der Exzenter 17 in die in Figur 3 gezeigte Vorspannstellung gebracht worden ist, übt das vorgespannte Federelement 6 eine gegeneinander gerichtete Vorspannkraft auf die ineinandergeführten konischen Endbereiche 3 und 4 aus. Bei dem in den Zeichnungen dargestellten Ausführungsbeispiel ist auf der gegenüberliegenden (nicht dargestellten) Seite, eine weitere, entsprechend der Vorspanneinrichtung 5 ausgebildete Vorspanneinrichtung vorgesehen. Zur Demonstration einer möglichen Wirkung der Vorspannkraft ist in Figur 3 zusätzlich dargestellt, dass die durch die Vorspannkraft zusammengedrückte Zwischenschicht 27 nach außen herausquillt (Zwischenschicht 27a). Das in Figur 3 gespannt dargestellte Federelement ist in dieser Stellung mit 6a bezeichnet. Der Exzenter ist in seiner in Figur 3 gezeigten Vorspannstellung mit 17a bezeichnet. Die Umfangsfläche des Exzenters ist im wesentlichen kreisrund ausgebildet, jedoch ist die Anlagefläche, welche in dem Vorspannzustand gemäß Figur 3 gegen den Bereich 16 des Spannelementes 6 anliegt, wesentlich geringer gekrümmt ausgebildet, als die übrigen Bereiche. Damit nimmt der Exzenter 17 in seiner Vorspannposition 17a eine Einraststellung ein, wodurch einer Bedienungsperson, die die Vorspanneinrichtung einstellt, in einfacher Weise signalisiert wird, dass die Vorspannstellung erreicht ist.

Durch die Möglichkeit, die Vorspanneinrichtung in Nicht-Vorspannstellung um die Achse der Rohrleitungsabschnitte 1 bzw. 2 zu verdrehen, kann die Vorspanneinrichtung jede beliebige Position zum Rohr einnehmen. Dies ist für die Montage vorteilhaft, insbesondere dann, wenn einer der Rohrleitungsabschnitte ein Rohrbogen ist oder als Feuerungsanschluss od. dgl. ausgebildet ist.

Bei den beschriebenen Vorspanneinrichtungen beider Ausführungsformen ist insbesondere deren flache Bauform günstig. Dies ist beispielsweise dann von Vorteil, wenn die zu verbindenden Rohrleitungsabschnitte in verbundenem Zustand das Innenrohr einer konzentrischen Anordnung aus einem Innenrohr und einem Außenrohr bilden. Solche konzentrischen Rohranordnungen werden beispielsweise bei Feuerungsanlagen eingesetzt, wobei der Ringspalt zwischen Innen- und Außenrohr der Zufuhr von Verbrennungsluft dient. Da ein derartigen Verwendungszwecken dienender Ringspalt durch irgendwelche Zusatzeinrichtungen im Querschnitt nicht wesentlich verkleinert werden darf, ist die erfindungsgemäße Vorspanneinrichtung hierfür besonders geeignet, da durch deren flache Bauform der Ringspalt nicht in unzulässiger Weise verkleinert wird.

Die Zwischenschicht, die gleichzeitig auch als Dichtmittel wirken kann, kann zusätzlich zu ihrer Funktion, eine Relativbewegung der zusammengeführten konisch ausgebildeten Endbereiche 3 und 4 durch Wirkung der Vorspanneinrichtung im Bedarfsfalle zu ermöglichen, auch dann vorteilhaft sein, wenn die ineinandergesteckten konisch ausgebildeten Endbereiche 3 und 4 im Bedarfsfall voneinander getrennt werden sollen.

Selbstverständlich können die Merkmale der vorstehend erläuterten Ausführungsformen - soweit möglich - miteinander kombiniert werden.

Im Rahmen der Erfindung sind viele weitere Varianten für mögliche Vorspanneinrichtungen denkbar, z.B. Schraubenfedern, federvorgespannte Schnellspanneinrichtungen usw.

## Patentansprüche

1. Vorrichtung zur Verbindung von Rohrleitungsabschnitten untereinander, vorzugsweise eine solche, bei der die miteinander zu verbindenden Rohrleitungsabschnitte (1, 2) jeweils konisch ausgebildete Endbereiche (3, 4) mit im wesentlichen gleichen Konuswinkeln aufweisen und über eine Steckverbindung durch Einstecken des konisch ausgebildeten Außen-Endbereichs (3) des einen Rohrleitungsabschnittes (1) in den konisch ausgebildeten Innen-Endbereich (4) des anderen Rohrleitungsabschnittes miteinander verbindbar sind, **dadurch gekennzeichnet, dass** eine sowohl an dem einen Rohrleitungsabschnitt (2) als auch an dem anderen Rohrleitungsabschnitt (1) derart angreifende Vorspanneinrichtung vorgesehen ist, dass in deren Wirkstellung eine im wesentlichen in Achsrichtung wirkende Zusammenhaltekraft auf die Rohrleitungsabschnitte (1, 2) ausgeübt wird.

2. Vorrichtung nach Anspruch 1, **dadurch gekennzeichnet, dass** sich zwischen den im Verbindungszustand einander zugewandten Oberflächen der konisch ausgebildeten Endbereiche (3, 4) eine Zwischenschicht (27) aus einem dauerhaft plastischen Material befindet, die vorzugsweise in einer eine unmittelbare Anlage und/oder Festfressen und/oder Kaltverschweißen der einander zugewandten Oberflächen der konischen Endbereiche (3, 4) verhindernden Weise und/oder in einer als Dichtmittel wirkenden Weise ausgebildet ist.

3. Vorrichtung nach Anspruch 2, **dadurch gekennzeichnet, dass** die Zwischenschicht durch Auftragen eines pastösen Werkstoffes auf wenigstens einen Teilbereich wenigstens eines der konisch ausgebildeten Endbereiche (3, 4) vor deren Zusammenstecken aufgebracht ist und/oder dass die Zwischenschicht (27) auf einem Trägermaterial aufgebracht ist, welches vor dem Zusammenfügen der konisch ausgebildeten Endbereiche (3, 4) nach Art eines Klebebandes auf wenigstens einen der konischen Endbereiche aufgebracht worden ist.

4. Vorrichtung nach einem der Ansprüche 1 bis 3, **dadurch gekennzeichnet, dass** die Vorspanneinrichtung wenigstens einen Federbügel (30a, 30b) aufweist, der mit einem Stirnendbereich an dem Außenumfang des einen Rohrleitungsabschnittes (2) anbringbar bzw. angebracht ist, und der Federbügel in seiner nicht der Wirkstellung entsprechenden Grundstellung (30a) konvex gekrümmt ist und der, um den Federbügel in seine Wirkstellung zu bringen, in eine gegenüber der gekrümmten Grundstellung gestreckte Stellung (30b) gebracht und dessen anderer Stirnendbereich mit dem Außenumfang des anderen Rohrleitungsabschnittes (1) verbunden wird, so dass eine Zugspannung zwischen den beiden Rohrleitungsabschnitten (1, 2) ausgeübt wird.

5. Vorrichtung nach Anspruch 4, **dadurch gekennzeichnet, dass** der wenigstens eine Federbügel (30a, 30b) in seinem anderen Endbereich eine Hakeneinrichtung (34a, 34b) aufweist, die eine an dem Außenumfang des anderen Rohrleitungsabschnittes befindliche Gegenhalterung (35, 36) einrastbar ist.

6. Vorrichtung nach Anspruch 5, **dadurch gekennzeichnet, dass** entlang des Außenumfangs der Rohrleitungsabschnitte zwei einander in etwa gegenüberliegende Federbügel (30a, 30b) vorgesehen sind, die jeweils in einem Stirnendbereich fest mit dem einen Rohrabschnitt (2) verbunden sind und an dem anderen Stirnendbereich jeweils eine Hakeneinrichtung (34a, 34b) aufweisen, die durch eine Umkantung des jeweiligen Federbügels um etwa 90° gebildet ist.

7. Vorrichtung nach Anspruch 5 oder 6, **dadurch gekennzeichnet, dass** die an dem anderen Rohrleitungsabschnitt vorgesehene Gegenhalterung einen sich - in axialer Richtung von dem Verbindungsbereich der Rohrabschnitte weg gesehen - konisch vergrößernden Umfangsbereich (35) sowie eine sich an diesen Bereich anschließende, zurückspringende Rastkante (36) aufweist, derart, dass sich der Federbügel (30a) ausgehend von der Grundstellung bei Ausübung einer Kraft (31) in Radialrichtung auf seinen Mittenbereich streckt, wobei die Hakeneinrichtung (34a) den konischen Bereich (35) überstreicht und schließlich bei Erreichen der Rastkante (36) diese hintergreift und damit in der Wirkstellung einrastet.

8. Vorrichtung nach einem der Ansprüche 1 bis 3, **dadurch gekennzeichnet, dass** die Vorspannkraft der Vorspanneinrichtung (5) einstellbar ausgebildet ist und/oder eine zum Angreifen eines Vorspannwerkzeugs ausgebildete Aufnahmeeinrichtung (25) aufweist.

9. Vorrichtung nach Anspruch 8, **dadurch gekennzeichnet, dass** die Vorspanneinrichtung (5) in ihrer Nicht-Wirkstellung über den Umfang der Rohrleitungsabschnitte (1, 2) verdrehbar ausgebildet ist und/oder dass die Vorspanneinrichtung (5) mehrere über den Umfang des Verbindungsbereiches angeordnete Einzel-Vorspanneinrichtungen aufweist, die vorzugsweise Federelemente (6) aufweisen.

10. Vorrichtung nach Anspruch 9, **dadurch gekennzeichnet, dass** die Federelemente (6) an einem der Rohrleitungsabschnitte (2) außerhalb des konisch ausgebildeten Endbereiches (4) vorzugsweise an einer die Außenseite des Rohrabschnittes (2) umfassenden und in axialer Richtung arretierten ersten Manschette (7) angebracht sind, und dass an dem anderen Rohrleitungsabschnitt (1) außerhalb des konischen Endbereiches (3) Gegenhalterungseinrichtungen (17, 23) für die Federelemente (6) vorgesehen sind.

11. Vorrichtung nach Anspruch 10, **dadurch gekennzeichnet, dass** die Gegenhalterungseinrichtungen an einer den Außenumfang des anderen Rohrleitungsabschnittes (1) umfassenden und in axialer Richtung arretierten zweiten Manschette (19) angebracht sind und/oder dass die Gegenhalterungseinrichtungen verstellbar angebrachte Exzenter (17) aufweisen, die zwischen einer Nicht-Vorspannposition und einer Vorspannposition (17a) der Federelemente (6) verstellbar ausgebildet sind und in Vorspannposition in einer eine Vorspannung der Federelemente (6) bewirkenden Weise gegen diese anliegen.

12. Vorrichtung nach Anspruch 11, **dadurch gekennzeichnet, dass** die Gegenhalterungseinrichtungen Einrichtungen zur Arretierung der Exzenter (17) in ihrer jeweiligen Nicht-Vorspannposition aufweisen, die vorzugsweise als Haken (26) ausgebildet sind.

13. Vorrichtung nach einem der Ansprüche 10 bis 12, **dadurch gekennzeichnet, dass** die Manschetten (7, 19) zur axialen Arretierung gegen über das Außenprofil der Rohrleitungsabschnitte (2, 1) nach außen vorstehende Ausformungen anliegen.

14. Vorrichtung nach einem der Ansprüche 11 bis 13, **dadurch gekennzeichnet, dass** die zur Anlage gegen den Federbereich (16) bestimmten Anlageflächen der Exzenter (17) unterschiedlich gekrümmt ausgebildet sind, derart, dass die Krümmung der Anlageflächen bei maximaler Vorspannposition (17a) geringer ist der außerhalb des Bereiches der maximalen Vorspannposition liegenden Anlageflächen.
